# EUROPÄISCHE PATENTSCHRIFT

(11) **EP 2 904 437 B1**
(45) Veröffentlichungstag und Bekanntmachung des Hinweises auf die Patenterteilung: **19.06.2019**
(21) Anmeldenummer: 13770416.9
(22) Anmeldetag: 17.09.2013
(51) Int. Cl.: G02B 5/04

(54) **PRISMA, INSBESONDERE FÜR DIE OPTISCHE DATENKOMMUNIKATION**
PRISM, PARTICULARLY FOR OPTICAL DATA COMMUNICATION
PRISME, EN PARTICULIER POUR LA COMMUNICATION OPTIQUE DE DONNÉES

(30) Priorität: 01.10.2012 DE 102012217954
(43) Veröffentlichungstag der Anmeldung: 12.08.2015
(73) Patentinhaber: Deutsches Zentrum für Luft- und Raumfahrt e.V., 51147 Köln (DE)
(72) Erfinder: HORWATH, Joachim, 82205 Gilching (DE); GIGGENBACH, Dirk, 86932 Pürgen (DE)
(74) Vertreter: dompatent von Kreisler Selting Werner - Partnerschaft von Patent- und Rechtsanwälten mbB
(86) Internationale Anmeldenummer: PCT/EP2013/069263
(87) Internationale Veröffentlichungsnummer: WO 2014/053311

(56) Entgegenhaltungen:
- WO-A1-2013/045699
- WO-A2-2006/133458
- GB-A- 586 392
- US-A- 4 634 223
- US-A1- 2007 258 246
- "Prisma", Meyers Großes Konversations-Lexikon , Bd. 16 31. Dezember 1908 (1908-12-31), Seite 354, XP002716238, Leipzig Gefunden im Internet: URL:http://www.zeno.org/nid/20007289723 [gefunden am 2013-11-12]

## Beschreibung

Die Erfindung betrifft ein Prisma zur Ablenkung von elektromagnetischen Wellen und insbesondere ein Prisma für die optische Datenkommunikation mittels eines modulierten Lichtstrahls.

Prismen für die Ablenkung elektromagnetischer Wellen sind in vielfachen technischen Gebieten bekannt. Ein Prisma weist im Regelfall einen transmissiven Prismenkörper auf, der in Seitenansicht betrachtet dreieckförmig ist. Zwischen den beiden dreieckigen ersten Seitenflächen des Prismenkörpers weist dieser eine Grundfläche sowie zwei von dieser aufragende zweite Seitenflächen auf, die der Grundfläche gegenüberliegend aneinander grenzen. Bei diesen beiden zweiten Seitenflächen handelt es sich im Regelfall um einerseits die Lichteinfallsfläche und andererseits die Lichtaustrittsfläche des Prismas.

Grundsätzlich ist es bei Prismen bekannt, dass diese Pyramidalfehler aufweisen können. Damit sind solche Fehlstellungen der Grundfläche und der Seitenflächen (d.h. der Lichteinfalls- und -ausfallsflächen) eines Prismas gemeint, auf Grund derer das Prisma die Form einer aus einer Pyramide herausgetrennten Scheibe aufweist (zur Definition von Pyramidalfehlern siehe beispielsweise NAUMANN, H.; SCHRÖDER, G.: Bauelemente der Optik. 6. Auflage, 1992, S. 180-181, ISBN: 3-446-17036-7). Wie insbesondere anhand von Bild 5.7.19 dieser Literaturstelle zu erkennen ist, sind die Seitenflächen des Prismas fehlerhafterweise gleichsinnig, nämlich aufeinander zu verkippt, so dass ihre Verlängerungen nach oben zur Spitze einer Pyramide zulaufen.

Sogenannte Reflektionsprismen zur Umlenkung von Lichtbündeln mit vorzugsweise geringem Justieraufwand gegenüber Spiegeln sind beispielsweise aus dem LINOS-Katalog von 2005/2006, S. 95, bekannt.

Um einen Lichtstrahl mit Hilfe eines Prismas wahlweise unter unterschiedlichen Ablenkwinkeln ablenken zu können, bedarf es einer Relativbewegung zwischen der Lichteinfallsfläche des Prismas und dem Lichtstrahl. Zumeist wird dies derart realisiert, dass das Prisma um eine Achse drehbar ist, die im Wesentlichen parallel zur Grundfläche verläuft sowie die beiden ersten Seitenflächen des Prismenkörpers durchdringt.

Je nach der aktuell gegebenen Konstellation können Fälle auftreten, in denen der Lichtstrahl unter einem rechten Winkel, also senkrecht auf die Lichteinfallsfläche auftrifft bzw. senkrecht, d.h. in Richtung der Normalen aus der Lichtaustrittsfläche austritt. In beiden Fällen treten an der Lichteinfallsfläche bzw. der Lichtaustrittsfläche Rückreflektionen auf. Dies kann durch eine antireflektive Beschichtung oder anderweitige Ausgestaltung der besagten Flächen minimiert werden. Gänzlich verhindern kann man allerdings Rückreflektionen nicht.

Rückreflektionen, wie sie oben beschrieben sind, reduzieren die Energie des durch das Prisma geführten Lichtstrahls. In dem Fall, in dem der Lichtstrahl moduliert ist, wie dies bei der optischen Datenkommunikation der Fall ist, führen Rückreflektionen zurück zum Sender zu Störungen der Datenkommunikation.

Aus WO-A-2006/133458 ist ein Prisma bekannt, bei dem die gemeinsame Kante der Lichteintritts- und der Lichtaustrittsfläche nicht parallel zur Grundfläche des Prismas sondern in einem spitzen Winkel zu dieser Grundfläche verläuft.

Aufgabe der Erfindung ist es, ein Prisma zu schaffen, bei dem der Grad an störender Rückreflektion weiter herabgesetzt ist.

Zur Lösung dieser Aufgabe wird mit der Erfindung ein Prisma, insbesondere für die optische Datenkommunikation mittels eines modulierten Lichtstrahls vorgeschlagen, das versehen ist mit den Merkmalen des Anspruchs 1. Die Merkmale einzelner Ausgestaltungen der Erfindung sind in den Unteransprüchen angegeben.

Erfindungsgemäß ist also das Prisma mit gegensinnig und im Wesentlichen unter gleichen Winkeln gekippten bzw. seitlich geneigten zweiten Seitenflächen versehen, was bedeutet, dass die Lichteinfallsfläche und die Lichtaustrittsfläche gegensinnig seitlich verkippt sind. Hierdurch gelangt also dann der reflektierte Anteil des auftreffenden Lichtstrahls nicht mehr exakt entgegengesetzt zur Ausbreitungsrichtung des Lichtstrahls zurück, sondern wird unter einem spitzen Winkel entgegengesetzt zu dieser Richtung abgelenkt, stört damit das den Strahl aussendende optische System nicht. Dies ist insbesondere bei der optischen Datenkommunikation von Vorteil, wo mit modulierten Lichtstrahlen gearbeitet wird. Die seitliche Verkippung in gegensinniger Richtung hat den Vorteil, dass die unverweigerlich entstehende seitliche Ablenkung beim Eintritt des Lichtstrahls in das Prisma bei dessen Austritt aus dem Prisma wieder kompensiert wird, es also zu einem seitlichen Parallelversatz der Strahlen kommt.

Die Verringerung bzw. das Ausblenden von Rückreflektionen auf der Lichteinfallsseite bzw. an der Lichteinfallsseite könnte beispielsweise auch dadurch erzielt werden, dass die Ausbreitungsrichtung des Lichtstrahls mit der Achse, die parallel zur Grundfläche und durch die beiden Ebenen, in denen die beiden ersten Seitenflächen des Prismas angeordnet sind, verläuft, einen vom rechten Winkel abweichenden Winkel bildet. Mit anderen Worten könnte man also das Prisma insgesamt gegenüber der Lichtstrahleinfallsachse verkippen. Dann aber würde man an der Lichtaustrittsfläche keine Kompensation mehr für die seitliche Ablenkung des Lichtstrahl erzielen können, es sei denn, dass die Lichtaustrittsfläche verkippt ist. Eine Prismenausgestaltung und Relativanordnung zur Richtung des eintreffenden Lichtstrahls, bei denen es nicht zu einem Prallelversatz kommt, ist im Rahmen dieser Erfindung ebenfalls abgedeckt.

In vorteilhafter Ausgestaltung der Erfindung kann ferner vorgesehen sein, dass die beiden zweiten Seitenflächen des Prismenkörpers, also die Lichteinfalls- und die Lichtaustrittsfläche, antireflektiv bzw. so ausgebildet sind, dass sie Reflektionen dämpfen.

In weiterer zweckmäßiger Ausgestaltung der Erfindung ist vorgesehen, dass der jeweilige spitze Neigungswinkel zwischen einigen wenigen 1/10 Winkelgrad bis einige wenige zig Winkelgerade, vornehmlich zwischen 0,1 Winkelgrad bis 15 Winkelgrad und insbesondere zwischen 2 Winkelgrad bis 5 Winkelgrad beträgt.

Das erfindungsgemäße Konzept der gegensinnigen Verkippung der Lichteinfalls- und Lichtaustrittsfläche gegen die Strahlrichtung kann bei Prismenkörpern eingesetzt werden, die in Seitenansicht betrachtet ein gleichseitiges rechtwinkliges Dreieck oder aber auch ein unregelmäßiges Dreieck darstellen.

Zusammengefasst kann man also die der Erfindung zu Grunde liegende Problemstellung und Lösung wie folgt umschreiben:
Je nach Kippwinkel des Prismas kann der durch das Prisma zu leitende und ggf. abzulenkende Lichtstrahl senkrecht auf die Lichteinfallsfläche des Prismas auftreffen bzw. senkrecht aus der Lichtausfallsfläche des Prismas austreten. Dabei kommt es verständlicherweise unweigerlich zu Rückreflektionen in den Sender, was insbesondere bei den in der optischen Nachrichtentechnik verwendeten modulierten Lichtstrahlen bzw. Lichtbündeln von Nachteil ist. Daher wird bei einer vorteilhaften Weiterbildung der Erfindung vorgeschlagen, dass die transmissive Komponente des optischen Ablenkelements eine Lichteinfallsfläche und eine Lichtaustrittsfläche aufweist, die zur Minimierung der Auswirkungen von Rückreflektionen von auf die Lichteinfallsfläche auftreffender Strahlung und/oder von durch die Lichtaustrittsfläche austretender Strahlung zur Kippachse gegensinnig geneigt und jeweils in einem spitzen Winkel zur Kippachse verlaufen, wobei Reflektionsstrahlung zur Seite reflektiert wird.

Durch das seitliche gegensinnige Kippen der Lichteinfalls- und Lichtaustrittsflächen wird zum Einen erreicht, dass die unvermeidlich entstehenden Reflektionen der reflektierten elektromagnetischen Wellen nicht in den Sender zurückgelangen, sondern zur Seite reflektiert werden, und zum Anderen wird durch die Gegensinnigkeit der Verkippung erreicht, dass es nur zu einem Parallelversatz des Strahls bezüglich der Apertur kommt, nicht aber zu einer Verkippung des Strahlenbündels in Kipprichtung der Flächen.

Diese Maßnahme kann selbstverständlich in Kombination mit einer Ausbildung der Lichteinfalls- und Lichtausfallsflächen, die zu einer verminderten Reflektion, und erhöhten Transmission führt, kombiniert werden. Derartige Maßnahmen sind beispielsweise in Form von Antireflektionsbeschichtungen bei Prismen grundsätzlich bekannt.

Der seitliche Neigungswinkel der oben genannten besagten Flächen des Prismas kann je nach tolerierter Gesamtgröße des Prismas grundsätzlich jeden denkbaren Wert einnehmen, so dass der Neigungswinkel ein spitzer Winkel ist. Je größer der Neigungswinkel allerdings ist, desto breiter muss das Prisma werden, um der Lichtstrahl-Apertur entsprechend viel Licht transportieren zu können. Bezüglich einer Miniaturisierung des Prismas und seiner geometrischen Abmessungen und damit bezüglich einer leichtgewichtigen und kleinformatigen Ausgestaltung des Prismas ist es von Vorteil, wenn der Winkel lediglich einige wenige Grad beträgt. Hier sind Neigungswinkel von beispielsweise 1/10 Winkelgrad bis einigen wenigen zig Winkelgeraden, vornehmlich 0,2 Winkelgrad bis 15 Winkelgrad und insbesondere 0,2 Winkelgrad bis 5 Winkelgrad bzw. 10 Winkelgrad möglich.

Das erfindungsgemäße Prisma lässt sich grundsätzlich in sämtlichen optischen Anwendungsfällen einsetzen, in denen heute schon Prismen für die Lichtstrahlablenkung bzw. Lichtstrahlbearbeitung eingesetzt werden. Insbesondere vorteilhaft ist der Einsatz des erfindungsgemäßen Prismas für die optische Datenkommunikation und vorzugsweise in einer sogenannten Coarse Pointing Assembly- (CPA-)Einheit, wie z.B. in WO2013/045699 beschrieben ist, deren Inhalt hiermit durch Bezugnahme zum Gegenstand der vorliegenden Patentanmeldung wird.

Die Erfindung wird nachfolgend anhand eines Ausführungsbeispiels sowie unter Bezugnahme auf die Zeichnung näher erläutert. Im Einzelnen zeigen dabei:

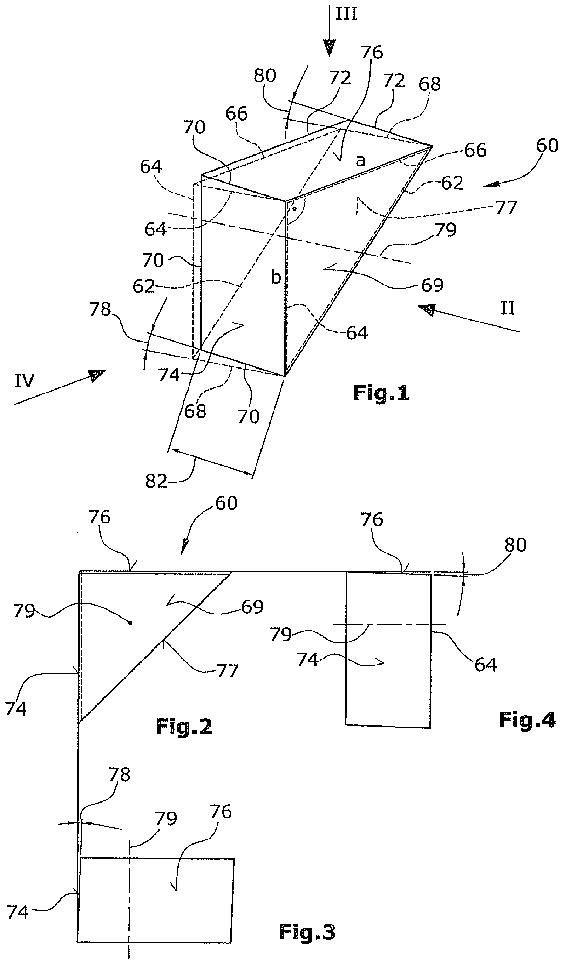

- Fign. 1 bis 4: verschiedene perspektivische und Seitenansichten eines Prismas gemäß einem Ausführungsbeispiel der Erfindung zur Verdeutlichung der gegenseitigen Verkippung der Lichteinfalls- und Lichtaustrittsflächen.

In den Fign. 1 bis 4 ist eine Prismenausgestaltung nach der Erfindung als ein Ausführungsbeispiel derselben gezeigt. Dabei zeigt Fig. 1 das Prisma 60 dieser Ausgestaltung in der Perspektive. Dabei ist mit den paarweise bzw. gruppenweise parallelverlaufenden gestrichelten Kanten 62,64,66 und 68 ein regelmäßiger Prismenkörper mit dreieckigen Seitenflächen 69 gezeigt (in diesem Ausführungsbeispiel ist der Sonderfall eines gleichschenkligen, rechtwinkligen Dreiecks dargestellt). Mit den durchgezogenen Linien 70 und 72 sind diejenigen Kantenverläufe angedeutet, die die Lichteinfallsfläche 74 und die Lichtaustrittsfläche 76 begrenzen (neben den bei 66 und 64 durchgezogen dargestellten Begrenzungskanten). Diese beiden Flächen 74,76 ragen von der Grundfläche 77 des Prismas auf. Zu erkennen ist, dass die Lichteinfallsfläche 74 um einen Neigungswinkel 78 relativ zur Achse 79 geneigt ist, während die Lichtaustrittsfläche 76 um den betragsmäßig gleichen Winkel 80 geneigt ist, jedoch gegensinnig zur Neigung der Lichteinfallsfläche 74. Dies ist auch in den Seitenansichten der Fign. 2 bis 4 gezeigt. Der Neigungswinkel beider Flächen 74,76 beträgt in diesem Ausführungsbeispiel zwei Winkelgrad, kann aber auch größer sein, wobei dann allerdings die Breite 82 des Prismas 60 vergrößert werden müsste, um den Lichtstrahl über seine gesamte Apertur noch führen und erfassen zu können.

Die gegenseitige Neigung der Lichteinfalls- und Lichtaustrittsflächen 74,76 begünstigt eine Minimierung der Störungen durch Rückreflektionen, wie sie insbesondere unter solchen Kippwinkeln des Prismas 60 auftreten, bei denen der Lichtstrahl senkrecht auf mindestens eine der beiden Flächen auftrifft. Die an den wie Spiegelflächen wirkenden Lichteinfalls- bzw. Lichtaustrittsflächen 74,76 entstehenden Reflektionen werden entgegengesetzt zur Einfallsrichtung und (geringfügig) zur Seite abgelenkt, gelangen also nicht wieder zurück zum Sender bzw. verlaufen also spitzwinklig zu der Richtung, aus der die auftreffenden Strahlen kommen. Somit können die reflektierten Strahlen durch optische Elemente wie beispielsweise Blenden oder dergleichen ausgeblendet werden.

## Patentansprüche

1. Prisma, insbesondere für die optische Datenkommunikation mittels eines modulierten Lichtstrahls, mit
- einem transmissiven Prismenkörper (60), der an seiner Außenseite zwei dreieckige erste Seitenflächen (69) und zwischen diesen eine Grundfläche (77) sowie zwei von dieser aufragende und gegeneinander geneigte zweite Seitenflächen als Lichteinfalls- und Lichtaustrittsflächen (74,76) aufweist,
- wobei die zweiten Seitenflächen (74,76), bezogen auf eine zur Grundfläche (77) parallel verlaufende und die Ebenen, in der die ersten Seitenflächen (69) liegen, durchdringende Achse (79) gegensinnig geneigt und jeweils in einem betragsmäßig gleichen spitzen Winkel (78,80) zur Achse (79) verlaufen, und
- wobei ein Teil eines auf die Lichteinfallsfläche (74) parallel zu einer der dreieckigen ersten Seitenflächen (69) auftreffenden Lichteinfallstrahls in einer zu der besagten ersten dreieckigen Seitenfläche (69) nicht parallelen Richtung als Reflektionsstrahl zur Seite reflektiert wird und ein weiterer Teil des Lichteinfallstrahls als Transmissionsstrahl durch die Lichteintrittsfläche (74) in den Prismenkörper (60) eindringt sowie an der Lichteintrittsfläche (74) zur Grundfläche (77) des Prismenkörpers (60) hin gebrochen wird, an der Grundfläche (77) des Prismenkörpers (60) zur Lichtaustrittsfläche (76) hin reflektiert wird und an der Lichtaustrittsfläche (76) gebrochen wird sowie unter einem seitlichen Parallelversatz zum Lichteinfallstrahl aus der Lichtaustrittsfläche (76) austritt.

2. Prisma nach Anspruch 1, **dadurch gekennzeichnet, dass** die zweiten Seitenflächen (74,76) antireflektiv ausgebildet sind.

3. Prisma nach Anspruch 1 oder 2, **dadurch gekennzeichnet, dass** der jeweilige spitze Neigungswinkel (78,80) zwischen einigen wenigen 1/10 Winkelgrad bis einige wenige zig Winkelgerade, vornehmlich zwischen 0,1 Winkelgrad bis 15 Winkelgrad und insbesondere zwischen 2 Winkelgrad bis 5 Winkelgrad beträgt.

4. Prisma nach einem der Ansprüche 1 bis 3, **dadurch gekennzeichnet, dass** sich die zweiten Seitenflächen (74,76) in der Projektion auf eine der beiden ersten Seitenflächen (69) betrachtet unter einem Winkel von 90 Grad erstrecken und insbesondere gleichlang sind.

## Claims

1. A prism, particularly for optical data communication by means of a modulated light beam, comprising
- a transmissive prism body (60) which has two triangular first side faces (69) on its outer side and, between said first side faces, a base surface (77) and two second side faces rising up from the base surface and inclined toward one another as light incidence and light exit faces (74,76),
- said second side faces (74,76) being inclined oppositely, relative to an axis (79) running parallel to the base surface (77) and penetrating the planes in which the first side faces (69) lie, and each running at an acute angle (78,80) of an identical amount to the axis (79), and
- wherein a part of an incident light beam which is incident in parallel to one of the two triangular first side faces (69) on the light incidence surface (74) is reflected as a reflection beam toward the side in a direction not parallel to said triangular first side face (69), and a further part of the incident light beam is caused to enter, as a transmission beam, through the light incidence surface (74) into the prism body (60) and is refracted at the light incidence surface (74) toward the base surface (77) of the prism body (60), is reflected at the base surface (77) of the prism body (60) toward the light exit face (76) and is refracted at the light exit face (76) and, with lateral parallel offset relative to the incident light beam, exits from the light exit face (76).

2. The prism according to claim 1, **characterized in that** the second side faces (74, 76) are anti-reflective.

3. The prism according to claim 1 or 2, **characterized in that** the respective acute angle of inclination (78,80) is in the range from a few 1/10 angular degrees to a few tens of angular degrees, preferably from an angular degree of 0.1 to 15 angular degrees, and with particular preference from 2 angular degrees to 5 angular degrees.

4. The prism according to any one of claims 1 to 3, **characterized in that** the second side faces (74,76), when viewed in the projection onto one of the first side faces (69), extend at an angle of 90° and particularly have the same length.

## Revendications

1. Prisme, destiné en particulier à la communication optique de données au moyen d'un faisceau lumineux modulé, le prisme comprenant
- un corps de prisme transmissif (60) comportant sur son côté extérieur deux premières surfaces latérales triangulaires (69) et, entre celles-ci, une surface de base (77) ainsi que deux surfaces latérales qui sont supportées par ladite surface de base et inclinées l'une par rapport à l'autre et qui sont des surfaces d'entrée de lumière et de sortie de lumière (74, 76),
- les deuxièmes surfaces latérales (74, 76) s'étendant de manière inclinée dans des directions opposées par rapport à un axe s'étendant parallèlement à la surface de base (77) et traversant les plans dans lesquels se trouvent les premières surfaces latérales (69), et s'étendant chacune par rapport à l'axe (79) suivant un angle aigu (78, 80), et
- une partie d'un faisceau de lumière incident, qui est incident à la surface d'entrée de lumière (74) parallèlement à l'une des premières surfaces latérales triangulaires (69), étant réfléchie sur le côté comme faisceau de réflexion dans une direction non parallèle à ladite première surface latérale triangulaire (69) et une autre partie du faisceau de lumière incident pénétrant comme faisceau de transmission dans le corps de prisme (60) à travers la surface d'entrée de lumière (74) et étant réfractée au niveau de la surface d'entrée de lumière (74) en direction de la surface de base (77) du corps de prisme (60), étant réfléchie au niveau de la surface de base (77) du corps de prisme (60) en direction de la surface de sortie de lumière (76) et étant réfractée au niveau de la surface de sortie de lumière (76) et sortant de la surface de sortie de lumière (76) avec un décalage latéral parallèle au faisceau de lumière incident.

2. Prisme selon la revendication 1, **caractérisé en ce que** les deuxièmes surfaces latérales (74, 76) sont conçues pour être antireflet.

3. Prisme selon la revendication 1 ou 2, **caractérisé en ce que** l'angle d'inclinaison aigu (78, 80) respectif est compris entre quelques 1/10 de degré d'angle et quelques degrés d'angle, principalement entre 0,1 degré d'angle et 15 degrés d'angle et en particulier entre 2 degrés d'angle et 5 degrés d'angle.

4. Prisme selon l'une des revendications 1 à 3, **caractérisé en ce que** les deuxièmes surfaces latérales (74, 76) s'étendent, en projection sur l'une des deux premières surfaces latérales (69), avec un angle de 90 degrés et ont notamment la même longueur.
